# EUROPEAN PATENT SPECIFICATION

(11) **EP 2 441 510 B1**
(45) Date of publication and mention of the grant of the patent: **13.07.2016**
(21) Application number: 10786039.7
(22) Date of filing: 20.05.2010
(51) Int. Cl.: B01D 53/94, B01D 39/14, B01D 39/20, B01J 23/34, B01J 23/68, B01J 23/89, B01J 35/04, B01J 35/10, B01J 37/02, B01J 37/08, F01N 3/02, F01N 3/10, F01N 3/28, B01J 37/34

(54) **OXIDATION CATALYST DEVICE FOR EXHAUST GAS PURIFICATION**
OXIDIERUNGSKATALYSATORVORRICHTUNG ZUR ABGASREINIGUNG
DISPOSITIF D'OXYDATION CATALYTIQUE POUR LA PURIFICATION DES GAZ D'ÉCHAPPEMENT

(30) Priority: 10.06.2009 JP 2009139520
(43) Date of publication of application: 18.04.2012
(73) Proprietor: Honda Motor Co., Ltd., Minato-ku Tokyo 107-8556 (JP)
(72) Inventor: TANAAMI, Kiyoshi, Wako-shi Saitama 351-0193 (JP); ISOGAI, Yuji, Wako-shi Saitama 351-0193 (JP); ISHIZAKI, Keita, Wako-shi Saitama 351-0193 (JP)
(74) Representative: Weickmann & Weickmann PartmbB
(86) International application number: PCT/JP2010/058550
(87) International publication number: WO 2010/143508

(56) References cited:
- EP-A1- 2 269 731
- EP-A2- 2 067 518
- EP-A2- 2 072 129
- WO-A1-2007/026844
- JP-A- 2006 326 375
- JP-A- 2006 346 597
- JP-A- 2008 100 184
- JP-A- 2009 045 584
- JP-A- 2009 112 962

## Description

### Technical Field

The present invention relates to an oxidation catalyst device for exhaust gas purification comprising a porous filter substrate and an oxidation catalyst supported on the porous filter substrate.

### Background Art

Exhaust gas discharged from an internal combustion engine, such as a diesel engine, contains particulates. It is feared that the above particulates have an adverse effect on the human body, and it is necessary to suppress the emission of the above particulates into the air. Therefore, conventionally, an exhaust gas purification device comprising a porous filter substrate which collects particulates has been provided in the exhaust system of a diesel car.

In the above exhaust gas purification device, when exhaust gas passes through the porous filter substrate, particulates contained in the exhaust gas are collected on the porous filter substrate. But, the particulates are deposited on the porous filter substrate in the process to cause pressure loss, thereby worsening fuel consumption. Therefore, it is necessary to periodically or continuously remove the particulates from the porous filter substrate.

The above particulates are mainly derived from fuel, and composed of a soluble organic fraction (SOF) which is an easily combustible component, and soot which is a hardly combustible component. Since the exhaust gas temperature is generally in the range of 200 to 450°C, the soluble organic fraction having a combustion start temperature in the range of 200 to 500°C is efficiently removed, while the soot having a combustion start temperature in the range of 550 to 700°C is hardly removed.

Therefore, a treatment is performed in which fuel is periodically injected into the exhaust system and combusted, and the temperature of the porous filter substrate is increased to the combustion temperature of the soot by combustion heat generated at the time, for forced regeneration. But, in the above treatment, it is necessary to maintain a state of a high temperature of about 600°C for 10 to 20 minutes in order to combust and remove the particulates deposited on the porous filter substrate, and melt damage to the porous filter substrate is feared. Therefore, it is necessary to decrease the combustion start temperature of the particulates, particularly the soot.

Accordingly, an oxidation catalyst device for exhaust gas purification in which an oxidation catalyst is supported on a porous filter substrate in order to decrease the combustion start temperature of particulates is known (for example, see Patent Literature 1). The above oxidation catalyst is composed of silver, copper, and oxides thereof, and ceria. The above oxidation catalyst is formed by immersing the porous filter substrate in an aqueous slurry comprising compounds of the catalyst metals and a binder, and drying and calcining the aqueous slurry.

In addition, as the above oxidation catalyst device for exhaust gas purification in which an oxidation catalyst is supported on a porous filter substrate, one in which the oxidation catalyst is composed of the complex metal oxide Y_{0.95}Ag_{0.05}Mn_{0.95}Ru_{0.05}O₃ is proposed by the present inventors (see Patent Literature 2). The above oxidation catalyst is formed by applying to the porous filter substrate a slurry prepared by mixing and grinding a calcined product, which is obtained by calcining compounds constituting the above complex metal oxide, water, and a binder, and calcining the slurry.

According to the above oxidation catalyst devices for exhaust gas purification, the combustion temperature of particulates can be decreased to the range of 450 to 520°C.

### Citation List

### Patent Literature

Patent Literature 1: Japanese Patent Laid-Open No. 2001-73748
Patent Literature 2: Japanese Patent Laid-Open No. 2009-136787

### Summary of Invention

### Technical Problem

However, in the above oxidation catalyst devices for exhaust gas purification, it is still necessary to maintain the above combustion time for 10 to 20 minutes, and there is the inconvenience of not being able to sufficiently prevent melt damage to the porous filter substrate.

It is an object of the present invention to eliminate such an inconvenience and provide an oxidation catalyst device for exhaust gas purification which can oxidize and combust particulates in exhaust gas from an internal combustion engine in a short time.

### Solution to Problem

In order to achieve such an object, in the present invention, in an oxidation catalyst device for exhaust gas purification comprising a porous filter substrate having a wall flow structure having one end as an exhaust gas inflow portion and having the other end as an exhaust gas outflow portion; and an oxidation catalyst supported on the porous filter substrate and composed of a complex metal oxide, the oxidation catalyst device for exhaust gas purification comprises the oxidation catalyst formed by applying an aqueous solution of compounds of a plurality of metals constituting the complex metal oxide to a surface of the porous filter substrate by any one method of a spray drying method, a spray pyrolysis method, and a freeze drying method, and calcining the aqueous solution, the oxidation catalyst coating the surface of the porous filter substrate into which exhaust gas flowing in from the exhaust gas inflow portion is to be introduced, and composed of a porous body having pores having a smaller pore diameter than pores of the porous filter substrate, the oxidation catalyst is composed of any one complex metal oxide represented by a chemical formula Y₁₋ₓAgₓMn_{1-y}Fe_{y}O₃ (0.01 ≤ x ≤ 0.30 and 0.005 ≤ y ≤ 0.30), and a total porosity of the porous filter substrate and the porous body is in the range of 50 to 80% by volume.

The oxidation catalyst device for exhaust gas purification according to the present invention comprises an oxidation catalyst supported on a porous filter substrate and composed of a complex metal oxide. By applying an aqueous solution of compounds of metals constituting the complex metal oxide to a surface of the porous filter substrate by any one method of a spray drying method, a spray pyrolysis method, and a freeze drying method, and calcining the aqueous solution, the oxidation catalyst is a porous body having pores having a smaller pore diameter than pores of the porous filter substrate.

With the oxidation catalyst device for exhaust gas purification according to the present invention, the oxidation catalyst is the complex metal oxide composed of a porous body having a smaller pore diameter than the porous filter substrate, and thus, particulates in exhaust gas from an internal combustion engine can be oxidized and combusted in a short time.

Also disclosed is a complex metal oxide (not according to the invention) represented by the chemical formula Y₁₋ₓAgₓMnO₃ in which in the complex metal oxide represented by the chemical formula YMO₃, part of Y, a first metal, is replaced by Ag, a third metal. In the complex metal oxide represented by the chemical formula Y 1 -,AgₓMnO₃, if x is less than 0.01, the effect of increasing oxidative catalytic activity is insufficient, and if x is more than 0.30, the heat resistance of the oxidation catalyst decreases, and sufficient performance cannot be obtained.

In addition, disclosed is a complex metal oxide (not according to the invention when A is Fe) represented by the chemical formula Y₁₋ₓAgₓMn_{1-y}A_{y}O₃ in which in the complex metal oxide represented by the chemical formula YMO₃, part of Y, a first metal, is replaced by Ag, a third metal, and part of Mn, a second metal, is replaced by a fourth metal. Here, the fourth metal is one metal selected from the group consisting of Ti, Nb, Ta, Ru, Ce, and Fe.

The crystal structure of the complex metal oxide represented by the chemical formula Y₁₋ₓAgₓMn_{1-y}A_{y}O₃ is a hexagonal crystal or a mixed crystal of a hexagonal crystal and a perovskite structure, and the complex metal oxide has high catalytic activity.

In the complex metal oxide represented by the chemical formula Y₁₋ₓAgₓMn_{1-y}A_{y}O₃, if x is less than 0.01, the effect of increasing oxidative catalytic activity is insufficient, and if x is more than 0.30, the heat resistance of the oxidation catalyst decreases, and sufficient performance cannot be obtained. In addition, if y is less than 0.005, the effect of increasing oxidative catalytic activity is insufficient, and ify is more than 0.30, sufficient hexagonal crystals cannot be obtained in the crystal structure of the complex metal oxide.

In addition, in the oxidation catalyst device for exhaust gas purification according to the present invention, it is necessary that a total porosity of the porous filter substrate and the porous body is in the range of 50 to 80% by volume. According to the configuration, the combustion temperature of particulates in exhaust gas from an internal combustion engine can be further decreased.

If the total porosity of the porous filter substrate and the porous body is less than 50% by volume, the pressure loss increases when the exhaust gas passes through the pores of the porous body. On the other hand, if the total porosity of the porous filter substrate and the porous body is more than 80% by volume, the probability of the contact of the exhaust gas with the oxidation catalyst forming the porous body decreases, and the effect of decreasing the combustion temperature of the particulates is not obtained.

In addition, in the oxidation catalyst device for exhaust gas purification according to the present invention, it is preferred that the oxidation catalyst comprises zirconium oxide in the range of 5 to 20% by mass with respect to the complex metal oxide. According to the configuration, the combustion temperature of particulates in exhaust gas from an internal combustion engine can be further decreased.

If the content of the zirconium oxide is less than 5% by mass, the combustion temperature sometimes can not be sufficiently decreased. In addition, even if the content of the zirconium oxide is more than 20% by mass, more effect sometimes can not be obtained.

In addition, in the oxidation catalyst device for exhaust gas purification according to the present invention, it is preferred that 95% or more of all the pores of the porous body have a pore diameter less than 10 µm. According to the configuration, the combustion temperature of particulates in exhaust gas from an internal combustion engine can be further decreased.

If in the porous body, the pores more than 5% of all have a pore diameter of 10 µm or more, the particulates in the exhaust gas cannot come into sufficient contact with the surfaces of the pores, and the effect of decreasing the combustion temperature of the particulates may not be sufficiently obtained.

### Brief Description of Drawings

[Figure 1] An explanatory diagram of an oxidation catalyst device for exhaust gas purification according to the present invention.
[Figure 2] Figure 2 shows cross-sectional images of an inflow cell surface of an oxidation catalyst device for exhaust gas purification in Comparative Example 1, and Figure 2(a) is a cross-sectional image at a magnification of 50x, and Figure 2(b) is a cross-sectional image at a magnification of 500x, showing the part A of Figure 2(a) which is enlarged.
[Figure 3] A graph showing the pore diameter of the pores of a porous filter substrate and an oxidation catalyst in the oxidation catalyst device for exhaust gas purification in Comparative Example 1.
[Figure 4] A graph showing the total porosity of a porous filter substrate and an oxidation catalyst in oxidation catalyst devices for exhaust gas purification in Comparative Examples 1 to 8, and Examples 1 and 2.
[Figure 5] A graph showing the particulate combustion time of the oxidation catalyst devices for exhaust gas purification in Examples 1 and 2, and Comparative Examples 1 to 8.
[Figure 6] Figure 6 shows cross-sectional images of an inflow cell surface of an oxidation catalyst device for exhaust gas purification in Comparative Example 3, and Figure 6(a) is a cross-sectional image at a magnification of 50x, and Figure 6(b) is a cross-sectional image at a magnification of 500x, showing the part A of Figure 6(a) which is enlarged.
[Figure 7] A graph showing the pore diameter of the porous filter substrate and the oxidation catalyst in the oxidation catalyst device for exhaust gas purification in Comparative Example 4.
[Figure 8] A graph showing the pore diameter of the pores of the porous filter substrate and the oxidation catalyst in the oxidation catalyst device for exhaust gas purification in Example 1.
[Figure 9] A graph showing the pore diameter of the pores of the porous filter substrate and the oxidation catalyst in the oxidation catalyst device for exhaust gas purification in Comparative Example 5.
[Figure 10] A graph showing the pore diameter of the porous filter substrate and the oxidation catalyst in the oxidation catalyst device for exhaust gas purification in Comparative Example 6.
[Figure 11] A graph showing the pore diameter of the pores of the porous filter substrate and the oxidation catalyst in the oxidation catalyst device for exhaust gas purification in Comparative Example 7.
[Figure 12] A graph showing the pore diameter of the pores of the porous filter substrate and the oxidation catalyst in the oxidation catalyst device for exhaust gas purification in Comparative Example 8.
[Figure 13] A graph showing the pore diameter of the pores of the porous filter substrate and the oxidation catalyst in the oxidation catalyst device for exhaust gas purification in Example 2.
[Figure 14] A graph showing the pore diameter of the pores of the porous filter substrate and the oxidation catalyst in the oxidation catalyst device for exhaust gas purification in Comparative Example 9.
[Figure 15] A graph showing the pore diameter of the pores of the porous filter substrate and the oxidation catalyst in the oxidation catalyst device for exhaust gas purification in Comparative Example 10.

### Description of Embodiment

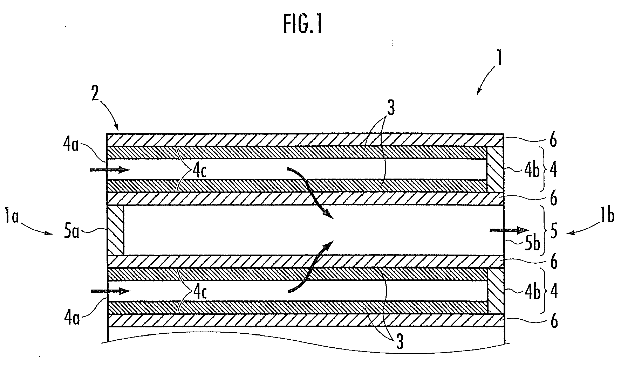

Next, an embodiment of the present invention will be described in more detail with reference to the accompanying drawings. As shown in Figure 1, an oxidation catalyst device for exhaust gas purification 1 in this embodiment is composed of a porous filter substrate 2 and an oxidation catalyst 3 supported on the porous filter substrate 2.

The porous filter substrate 2 has, for example, a rectangular parallelepiped shape, and a plurality of through holes axially passing therethrough are disposed like a grid in cross section to form a wall flow structure. In the porous filter substrate 2, one end of the above wall flow structure is an exhaust gas inflow portion I a, and the other end is an exhaust gas outflow portion 1b. The porous filter substrate 2 comprises a plurality of inflow cells 4 and a plurality of outflow cells 5 composed of the above through holes.

In the inflow cell 4, an end 4a on the exhaust gas inflow portion I a side is opened, and an end 4b on the exhaust gas outflow portion 1b side is closed. Exhaust gas is introduced into the oxidation catalyst device for exhaust gas purification 1 via the inflow cells 4.

On the other hand, in the outflow cell 5, an end 5a on the exhaust gas inflow portion 1a side is closed, and an end 5b on the exhaust gas outflow portion 1b side is opened. The exhaust gas is discharged from the porous filter substrate 2 via the outflow cells 5.

The inflow cells 4 and the outflow cells 5 are alternately disposed so as to be like a checkered grid in cross section, and the inflow cells 4 and the outflow cells 5 are separated from each other by cell partition walls 6 forming the boundary portions between the cells 4 and 5. Although not shown, a regulation member composed of metal which regulates the outflow of the exhaust gas is provided on the outer peripheral portion of the outermost layer cell partition wall 6.

The porous filter substrate 2 is, for example, composed of SiC, and comprises a plurality of pores (not shown). The porous filter substrate 2 comprises, for example, the above pores having an average pore diameter of 11.2 µm. In addition, the porous filter substrate 2 itself has a porosity in the range of 20 to 60% by volume.

The oxidation catalyst 3 is composed of any one complex metal oxide represented by the chemical formula Y₁₋ₓAgₓMn_{1-y}Fe_{y}O₃ (0.0 1 < x _{<} 0.30 and 0.005 < y < 0.30).

The oxidation catalyst 3 is formed by applying an aqueous solution of compounds of a plurality of metals constituting the above complex metal oxide to surfaces of the porous filter substrate 2 by any one method of a spray drying method, a spray pyrolysis method, and a freeze drying method, and calcining the aqueous solution.

Here, the above spray drying method can be performed by atomizing the aqueous solution of the above compounds of the plurality of metals using an ultrasonic nebulizer or the like, and ejecting the atomized aqueous solution into hot air to instantaneously deposit a dry material composed of the above compounds of the plurality of metals on the inflow cells 4.

In addition, the above spray pyrolysis method can be performed by heating the dry material composed of the above compounds of the plurality of metals, which is deposited on the inflow cells 4 by the above spray drying method, to a temperature in the range of 120 to 1200°C.

In addition, the above freeze drying method can be performed by freezing the aqueous solution of the above compounds of the plurality of metals in the inflow cells 4 of the porous filter substrate 2 and subliming moisture contained in the aqueous solution under reduced pressure to deposit a dry material composed of the above compounds of the plurality of metals on the inflow cells 4.

In the cases of the above spray drying method and the above freeze drying method, it is necessary to subsequently calcine the porous filter substrate 2 to which the above aqueous solution is applied. But, in the above spray pyrolysis method, the application and calcining of the above aqueous solution are simultaneously performed, and therefore, it is not necessary to separately perform calcining.

By being formed as described above, the oxidation catalyst 3 coats surfaces 4c of the inflow cells 4 and forms a porous body having pores (not shown) having a smaller pore diameter than the pores of the porous filter substrate 2.

In the above porous body, 95% or more of all the above pores have a pore diameter less than 10 µm In addition, in the porous filter substrate 2 and the oxidation catalyst 3, the total porosity of both is in the range of 50 to 80% by volume.

In the oxidation catalyst device for exhaust gas purification 1, a porous substrate composed of SiC is used as the porous filter substrate 2, but a porous body composed of Si-SiC may be used.

Next, the operation of the oxidation catalyst device for exhaust gas purification 1 in this embodiment will be described with reference to Figure 1. First, the oxidation catalyst device for exhaust gas purification 1 is installed so that the exhaust gas inflow portion 1a is upstream of the exhaust gas flow path of an internal combustion engine. When the oxidation catalyst device for exhaust gas purification 1 is installed in this manner, the above exhaust gas is introduced into the inflow cells 4 at the ends 4a, as shown by arrows in Figure 1, because the ends 5a of the outflow cells 5 are closed.

At this time, since the ends 4b of the inflow cells 4 on the exhaust gas outflow portion 1b side are closed, the above exhaust gas introduced into the inflow cells 4 adheres to the surfaces 4c of the inflow cells 4 and is caused to flow into the outflow cells 5 via the pores of the cell partition walls 6. The oxidation catalyst 3 composed of the above porous body is supported on the surfaces 4c of the inflow cells 4. Therefore, while the above exhaust gas is caused to flow, particulates in the exhaust gas come into contact with the oxidation catalyst 3, oxidized and combusted by the action of the oxidation catalyst 3, and removed.

As a result, the above exhaust gas from which the above particulates are removed by combustion is discharged outside from the ends 5b of the outflow cells 5 on the exhaust gas outflow portion 1b side.

The oxidation catalyst device for exhaust gas purification 1 in this embodiment comprises the oxidation catalyst 3 composed of a porous body having pores having a small pore diameter, and the oxidation catalyst 3 is composed of the above complex metal oxide. In addition, 95% or more of all the pores of the above porous body have a pore diameter less than 10 µm. In addition, the total porosity of the porous filter substrate 2 and the above porous body is in the range of 50 to 80% by volume. Therefore, according to the oxidation catalyst device for exhaust gas purification 1 in this embodiment, particulates in exhaust gas from an internal combustion engine can be oxidized and combusted in a short time.

In the oxidation catalyst device for exhaust gas purification 1 in this embodiment, the oxidation catalyst 3 preferably comprises zirconium oxide in the range of 5 to 20% by mass with respect to the above complex metal oxide. In this case, the combustion temperature of particulates in exhaust gas from an internal combustion engine can be further decreased.

Next, Examples and Comparative Examples in the present invention will be illustrated.

### Comparative Example 1

In this Example, first, yttrium nitrate pentahydrate, silver nitrate, manganese nitrate hexahydrate, and ruthenium nitrate were mixed at a molar ratio of 0.95:0.05:0.95:0.05 to obtain a mixture of the above compounds. Next, the obtained mixture was dissolved in pure water so that the yttrium concentration was 0.04 mol/L, to obtain an aqueous solution of the mixture.

Next, a porous filter substrate 2 in which a plurality of through holes axially passing therethrough were disposed like a grid in cross section (a SiC porous substrate manufactured by NGK INSULATORS, LTD., trade name: MSC 14) was prepared. The porous filter substrate 2 had a rectangular parallelepiped shape having dimensions of 34 x . 34 x 50 mm and having an apparent volume of 57800 mm³, and the average pore diameter of the pores was 11.2 µm.

Next, one ends of the above through holes of the porous filter substrate 2 were closed alternately (that is, so as to be like a checkered grid in cross section) by a ceramic adhesive comprising silica as the main component to form outflow cells 5. In addition, the other ends of the above through holes of the porous filter substrate 2 whose one ends were not closed were closed by the above ceramic adhesive to form inflow cells 4.

Next, for the porous filter substrate 2 in which the outflow cells 5 and the inflow cells 4 were formed, the above aqueous solution was applied to the surfaces 4c of the inflow cells 4 and calcined by a spray pyrolysis method. The above spray pyrolysis method was performed as follows.

First, the mass of the porous filter substrate 2 was measured. Next, the above aqueous solution was atomized using an ultrasonic nebulizer (manufactured by OMRON Corporation, trade name: OMRON Ultrasonic Nebulizer NE-U 17). Next, the obtained spray of the above aqueous solution was dispersed into carrier gas in the air atmosphere, and the carrier gas was introduced into the inflow cells 4. As a result, a plurality of metal compounds contained in the above mixture were deposited on the surfaces 4c of the inflow cells 4. At this time, in order to prevent the above carrier gas from remaining in the porous filter substrate 2, a pump connected to the end on the exhaust gas outflow portion 1 b side was operated to allow the carrier gas to flow outside via the outflow cells 5.

During the introduction of the above carrier gas, the porous filter substrate 2 was maintained and heated at a temperature of 800°C by a ceramic heater. Then, after the mass of the porous filter substrate 2 was increased by 2.45 g, the introduction of the above carrier gas was completed.

As a result, the above aqueous solution applied to the surfaces 4c of the inflow cells 4 of the porous filter substrate 2 was calcined, and an oxidation catalyst 3 composed of a complex metal oxide represented by the chemical formula Y_{0.95}Ag_{0.05}Mn_{0.95}Ru_{0.05}O₃ was formed. An oxidation catalyst device for exhaust gas purification 1 in this Example was obtained as described above. The amount of the oxidation catalyst 3 supported per an apparent volume of 1 L of the porous filter substrate 2 was 40 g in total.

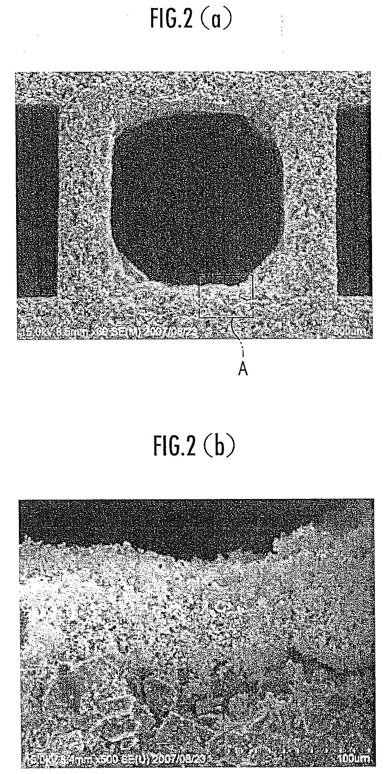

Next, for the oxidation catalyst device for exhaust gas purification 1 in this Example, first, cross-sectional images of the surface 4c of the inflow cell 4 were taken using an electron microscope. Cross-sectional images of the oxidation catalyst device for exhaust gas purification 1 in this Example are shown in Figures 2(a) and 2(b). As shown in Figures 2(a) and 2(b), it is clear that in the oxidation catalyst device for exhaust gas purification 1 in this Example, the surface 4c of the inflow cell 4 is uniformly coated with the oxidation catalyst 3 composed of a porous body.

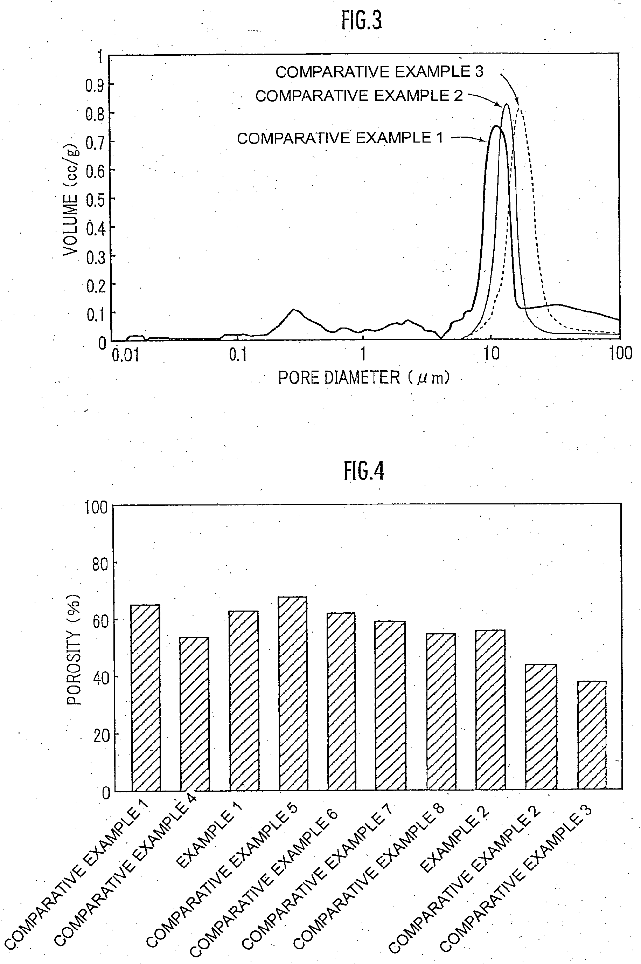

Next, for the oxidation catalyst device for exhaust gas purification 1 in this Example, the pore diameter of the pores of the porous filter substrate 2 and the oxidation catalyst 3, and the total porosity of the porous filter substrate 2 and the oxidation catalyst 3 were measured by a mercury porosimetry method. The result of the measurement of the pore diameter of the pores of the porous filter substrate 2 and the oxidation catalyst 3 is shown in Figure 3. The result of the measurement of the total porosity of the porous filter substrate 2 and the oxidation catalyst 3 is shown in Figure 4.

As shown in Figure 3, in the oxidation catalyst device for exhaust gas purification 1 in this Example, the pore diameter of the pores of the porous filter substrate 2 and the oxidation catalyst 3 is in the range of 0.09 to 100 µm. Here, considering that the average pore diameter of the pores of the porous filter substrate 2 is 11.2 µm, it is considered that the pore diameter of the pores of the oxidation catalyst 3 is in the range of 0.09 to 10 µm.

In addition, as shown in Figure 4, it is clear that in the oxidation catalyst device for exhaust gas purification 1 in this Example, the total porosity of the porous filter substrate 2 and the oxidation catalyst 3 is 65.5% by volume.

Next, for the oxidation catalyst device for exhaust gas purification 1 in this Example, an oxidation catalyst performance evaluation test was performed as follows. First, the oxidation catalyst device for exhaust gas purification 1 was mounted in the exhaust system of a diesel engine installed in an engine bench. The displacement of the above diesel engine was 2.2 L.

Next, the above diesel engine was operated to collect 4 g of particulates per an apparent volume of 1 L of the oxidation catalyst device for exhaust gas purification 1 in the oxidation catalyst device for exhaust gas purification 1. For the operation conditions of the above diesel engine, the temperature of the gas flowing into the oxidation catalyst device for exhaust gas purification 1 was 300°C, the number of revolutions of the engine was 1500 revolutions/min, and the torque was 80 N·m.

Next, the oxidation catalyst device for exhaust gas purification 1 in which the particulates were collected was removed from the above exhaust system, and fixed in a quartz tube in a catalyst evaluation device. Next, the oxidation catalyst device for exhaust gas purification 1 was heated, while nitrogen was fed from one end of the above quartz tube, and the temperature was increased to a temperature of 600°C. The above heating was performed by a heating furnace provided around the above quartz tube. Next, at a point when a temperature of 600°C was reached, mixed gas in which the volume ratio of oxygen to nitrogen was 15:85 was fed at a flow velocity of 12.8 L/min, instead of nitrogen.

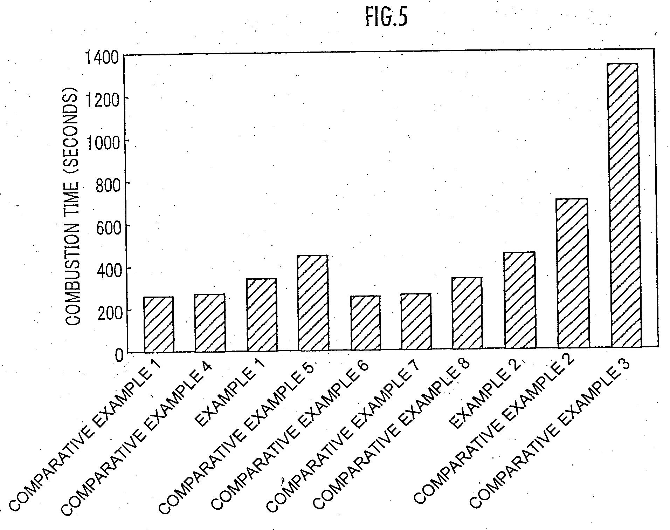

Then, carbon monoxide and carbon dioxide produced by the oxidation and combustion of the particulates collected in the oxidation catalyst device for exhaust gas purification 1 were introduced into a gas analysis device (manufactured by HORIBA, Ltd., trade name: MWXA-7500D) connected to the other end (discharge port) of the above quartz tube. Next, the concentration of carbon monoxide and carbon dioxide was measured by the above gas analysis device, and the time required until 90% by mass of the particulates collected in the oxidation catalyst device for exhaust gas purification I were combusted was measured. The result is shown in Figure 5.

As shown in Figure 5, it is clear that in the oxidation catalyst device for exhaust gas purification 1 in this Example, the time required until 90% by mass of the collected particulates are combusted is 269 seconds.

### [Comparative Example 2]

In this Comparative Example, the porous filter substrate used in this Comparative Example 1 (a SiC porous substrate manufactured by NGK INSULATORS, LTD., trade name: MSC14), itself, was an oxidation catalyst device for exhaust gas purification. In the oxidation catalyst device for exhaust gas purification in this Comparative Example, no oxidation catalyst was supported.

Next, for the oxidation catalyst device for exhaust gas purification in this Comparative Example, the pore diameter of the pores of the above porous filter substrate, and the porosity of the porous filter substrate were measured in exactly the same manner as that of Example 1. The result of the measurement of the pore diameter of the pores of the above porous filter substrate is shown in Figure 3. The result of the measurement of the porosity of the above porous filter substrate is shown in Figure 4.

As shown in Figure 3, it is clear that in the oxidation catalyst device for exhaust gas purification in this Comparative Example, the pore diameter of the pores of the above porous filter substrate is in the range of 5 to 100 µm.

In addition, as shown in Figure 4, it is clear that in the oxidation catalyst device for exhaust gas purification in this Comparative Example, the porosity of the above porous filter substrate is 43.4% by volume.

Next, for the oxidation catalyst device for exhaust gas purification in this Comparative Example, the oxidation catalyst performance evaluation test was performed in exactly the same manner as that of Comparative Example 1. The result is shown in Figure 5.

As shown in Figure 5, it is clear that in the oxidation catalyst device for exhaust gas purification in this Comparative Example, the time required until 90% by mass of the collected particulates are combusted is 700 seconds.

### [Comparative Example 3]

In this Comparative Example, first, yttrium nitrate pentahydrate, silver nitrate, manganese nitrate hexahydrate, and ruthenium nitrate were mixed at a molar ratio of 0.95:0.05:0.95:0.05 to obtain a mixture of the above compounds. Next, the above mixture was mixed and ground, and then maintained at a temperature of 800°C for 1 hour for primary calcining. Next, the resultant obtained by the above primary calcining was mixed with water, and the mixture was ground, and then mixed and ground using a rotary ball mill at 100 revolutions/min for 5 hours to prepare a slurry.

Next, the porous filter substrate used in this Comparative Example 1 (a SiC porous substrate manufactured by NGK INSULATORS, LTD., trade name: MSC 14) was prepared, and one ends of the through holes of the porous filter substrate were alternately closed in exactly the same manner as that of Example 1 to form outflow cells.

Next, the above slurry was poured into the porous filter substrate in which the above outflow cells were formed, from the side on which the above ends are closed, to allow the slurry to flow into the through holes whose ends were not closed (that is, cells other than the above outflow cells). Next, an excessive amount of the above slurry was removed from the porous filter substrate into which the above slurry was allowed to flow.

Next, the porous filter substrate to which the above slurry was adhered was maintained at a temperature of 800°C for 1 hour for secondary calcining. As a result, an oxidation catalyst composed of a complex metal oxide represented by the chemical formula Y_{O·95}Ago_{·05}Mn_{O·95}R_{UO·}0₅03 was formed on the surfaces of the above inflow cells. An oxidation catalyst device for exhaust gas purification in this Comparative Example was obtained as described above. The amount of the above oxidation catalyst supported per an apparent volume of 1 L of the above porous filter substrate was 80 g in total.

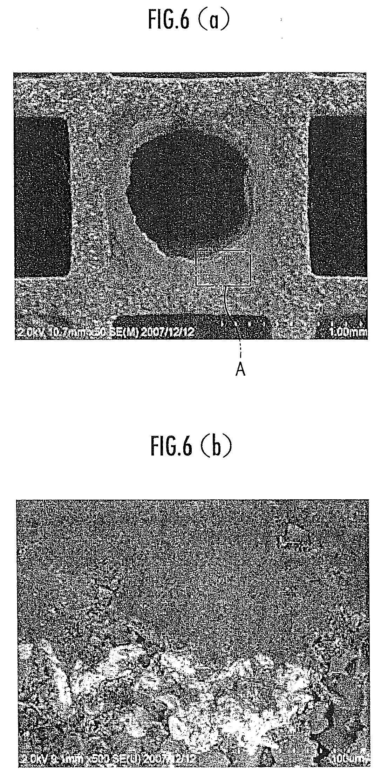

Next, for the oxidation catalyst device for exhaust gas purification in this Comparative Example, cross-sectional images of the surface of the inflow cell were taken in exactly the same manner as that of Comparative Example 1. Cross-sectional images of the oxidation catalyst device for exhaust gas purification in this Comparative Example are shown in Figures 6(a) and 6(b). As shown in Figures 6(a) and 6(b), it is clear that in the oxidation catalyst device for exhaust gas purification in this Comparative Example, the surface of the inflow cell is coated with the oxidation catalyst having a smaller number of pores than the porous body forming the oxidation catalyst 3 of the oxidation catalyst device for exhaust gas purification 1 in Comparative Example 1.

Next, for the oxidation catalyst device for exhaust gas purification in this Comparative Example, the pore diameter of the pores of the above porous filter substrate and the above oxidation catalyst, and the total porosity of the porous filter substrate and the oxidation catalyst were measured in exactly the same manner as that of Comparative Example 1. The result of the measurement of the pore diameter of the pores of the above porous filter substrate and the above oxidation catalyst is shown in Figure 3. The result of the measurement of the total porosity of the above porous filter substrate and the above oxidation catalyst is shown in Figure 4.

As shown in Figure 3, in the oxidation catalyst device for exhaust gas purification in this Comparative Example, the pore diameter of the pores of the above porous filter substrate and the above oxidation catalyst is in the range of 5 to 100 µm. Here, considering that the average pore diameter of the pores of the above porous filter substrate is 11.2 µm, it is considered that the pore diameter of the pores of the above oxidation catalyst is in the range of 20 to 100 µm.

In addition, as shown in Figure 4, it is clear that in the oxidation catalyst device for exhaust gas purification in this Comparative Example, the total porosity of the above porous filter substrate and the above oxidation catalyst is 37.6% by volume.

Next, for the oxidation catalyst device for exhaust gas purification in this Comparative Example, the oxidation catalyst performance evaluation test was performed in exactly the same manner as that of Comparative Example 1. The result is shown in Figure 5.

As shown in Figure 5, it is clear that in the oxidation catalyst device for exhaust gas purification in this Comparative Example, the time required until 90% by mass of the collected particulates are combusted is 1320 seconds.

### [Comparative Example 4]

In this Example, first, except that yttrium nitrate pentahydrate, silver nitrate, manganese nitrate hexahydrate, and titanium(IV) methoxide were mixed at a molar ratio of 0.95:0.05:0.95:0.05, an aqueous solution of a mixture of the above compounds was obtained in exactly the same manner as that of Comparative Example 1.

Next, except that the aqueous solution obtained in this Comparative Example was used, the aqueous solution was applied to the porous filter substrate 2 and calcined in exactly the same manner as that of Comparative Example 1 to manufacture an oxidation catalyst device for exhaust gas purification 1 in this Comparative Example. The oxidation catalyst device for exhaust gas purification 1 in this Comparative Example comprised an oxidation catalyst 3 composed of a complex metal oxide represented by the chemical formula Y_{0.95}Ag_{0.05}Mn_{0.95}Ti_{0.05}O₃. The amount of the oxidation catalyst 3 supported per an apparent volume of 1 L of the porous filter substrate 2 was 40 g in total.

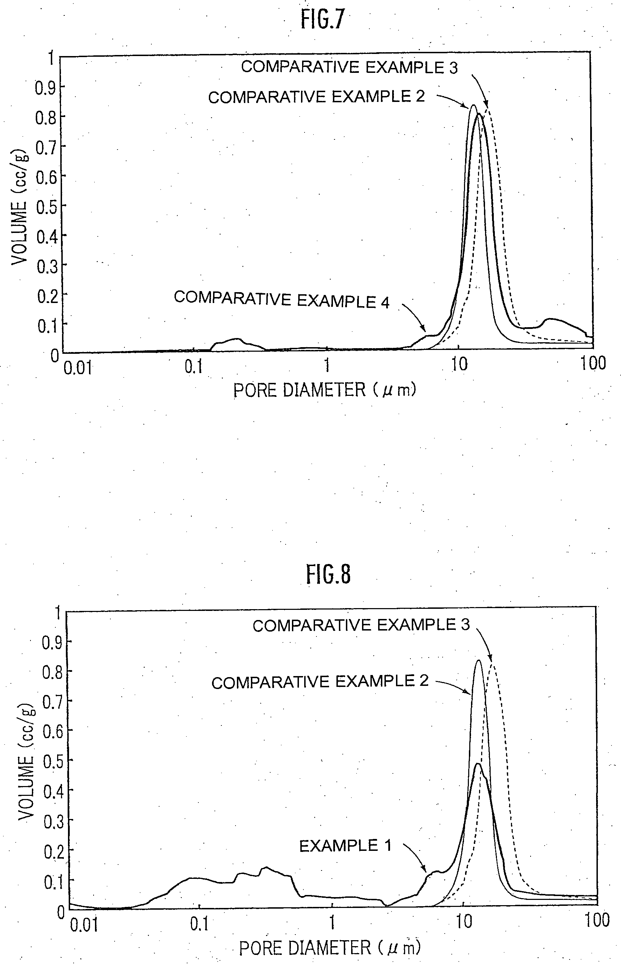

Next, for the oxidation catalyst device for exhaust gas purification 1 in this Comparative Example, the pore diameter of the pores of the porous filter substrate 2 and the oxidation catalyst 3, and the total porosity of the porous filter substrate 2 and the oxidation catalyst 3 were measured in exactly the same manner as that of Comparative Example 1. The result of the measurement of the pore diameter of the pores of the porous filter substrate 2 and the oxidation catalyst 3 is shown in Figure 7. The result of the measurement of the total porosity of the porous filter substrate 2 and the oxidation catalyst 3 is shown in Figure 4.

As shown in Figure 7, in the oxidation catalyst device for exhaust gas purification 1 in this Comparative Example, the pore diameter of the pores of the porous filter substrate 2 and the oxidation catalyst 3 is in the range of 0.1 to 100 µm. Here, considering that the average pore diameter of the pores of the porous filter substrate 2 is 11.2 µm, it is considered that the pore diameter of the pores of the oxidation catalyst 3 is in the range of 0.1 to 10 µm.

In addition, as shown in Figure 4, it is clear that in the oxidation catalyst device for exhaust gas purification 1 in this Comparative Example, the total porosity of the porous filter substrate 2 and the oxidation catalyst 3 is 54.0% by volume.

Next, for the oxidation catalyst device for exhaust gas purification 1 in this Comparative Example, the oxidation catalyst performance evaluation test was performed in exactly the same manner as that of Comparative Example 1. The result is shown in Figure 5.

As shown in Figure 5, it is clear that in the oxidation catalyst device for exhaust gas purification 1 in this Comparative Example, the time required until 90% by mass of the collected particulates are combusted is 272 seconds.

### [Example 1]

In this Example, first, except that yttrium nitrate pentahydrate, silver nitrate, manganese nitrate hexahydrate, and iron nitrate nonahydrate were mixed at a molar ratio of 0.95:0.05:0.95:0.05, an aqueous solution of a mixture of the above compounds was obtained in exactly the same manner as that of Comparative Example 1.

Next, except that the aqueous solution obtained in this Example was used, the aqueous solution was applied to the porous filter substrate 2 and calcined in exactly the same manner as that of Comparative Example 1 to manufacture an oxidation catalyst device for exhaust gas purification 1 in this Example. The oxidation catalyst device for exhaust gas purification 1 in this Example comprised an oxidation catalyst 3 composed of a complex metal oxide represented by the chemical formula Y_{0.95}Ag_{0.05}Mn_{0.95}Fe_{0.05}O₃. The amount of the oxidation catalyst 3 supported per an apparent volume of 1 L of the porous filter substrate 2 was 40 g in total.

Next, for the oxidation catalyst device for exhaust gas purification 1 in this Example, the pore diameter of the pores of the porous filter substrate 2 and the oxidation catalyst 3, and the total porosity of the porous filter substrate 2 and the oxidation catalyst 3 were measured in exactly the same manner as that of Comparative Example 1. The result of the measurement of the pore diameter of the pores of the porous filter substrate 2 and the oxidation catalyst 3 is shown in Figure 8. The result of the measurement of the total porosity of the porous filter substrate 2 and the oxidation catalyst 3 is shown in Figure 4.

As shown in Figure 8, in the oxidation catalyst device for exhaust gas purification 1 in this Example, the pore diameter of the pores of the porous filter substrate 2 and the oxidation catalyst 3 is in the range of 0.02 to 100 µm. Here, considering that the average pore diameter of the pores of the porous filter substrate 2 is 11.2 µm, it is considered that the pore diameter of the pores of the oxidation catalyst 3 is in the range of 0.02 to 10 µm.

In addition, as shown in Figure 4, it is clear that in the oxidation catalyst device for exhaust gas purification 1 in this Example, the total porosity of the porous filter substrate 2 and the oxidation catalyst 3 is 60.2% by volume.

Next, for the oxidation catalyst device for exhaust gas purification 1 in this Example, the oxidation catalyst performance evaluation test was performed in exactly the same manner as that of Comparative Example 1. The result is shown in Figure 5.

As shown in Figure 5, it is clear that in the oxidation catalyst device for exhaust gas purification 1 in this Example, the time required until 90% by mass of the collected particulates are combusted is 300 seconds.

### [Comparative Example 5]

In this Comparative Example, first, except that yttrium nitrate pentahydrate and manganese nitrate hexahydrate were mixed at a molar ratio of 1:1, an aqueous solution of a mixture of the above compounds was obtained in exactly the same manner as that of Comparative Example 1.

Next, except that the aqueous solution obtained in this Comparative Example was used, the aqueous solution was applied to the porous filter substrate 2 and calcined in exactly the same manner as that of Comparative Example 1 to manufacture an oxidation catalyst device for exhaust gas purification 1 in this Comparative Example. The oxidation catalyst device for exhaust gas purification 1 in this Comparative Example comprised an oxidation catalyst 3 composed of a complex metal oxide represented by the chemical formula YMnO₃. The amount of the oxidation catalyst 3 supported per an apparent volume of 1 L of the porous filter substrate 2 was 40 g in total.

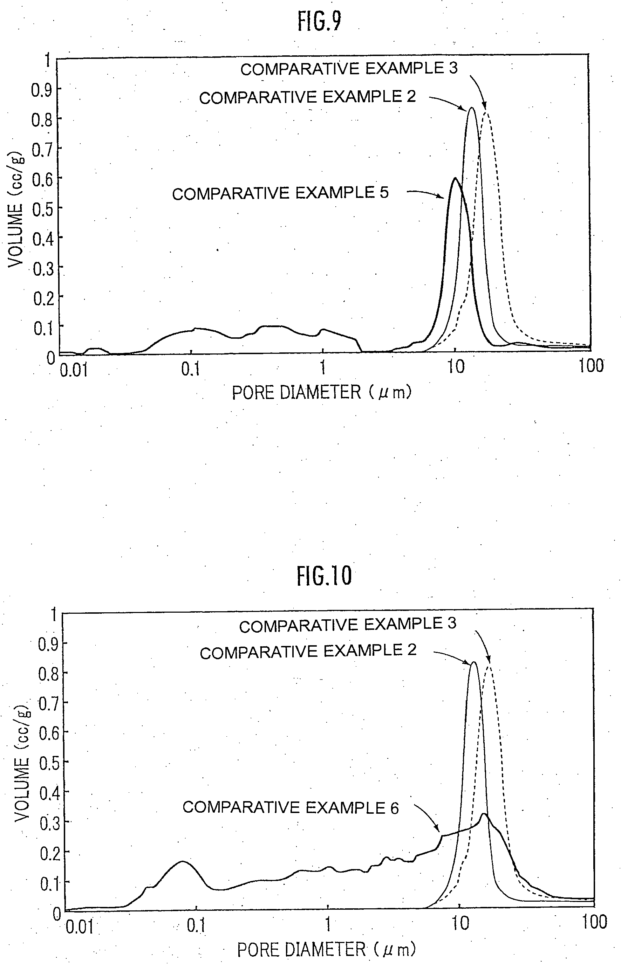

Next, for the oxidation catalyst device for exhaust gas purification 1 in this Comparative Example, the pore diameter of the pores of the porous filter substrate 2 and the oxidation catalyst 3, and the total porosity of the porous filter substrate 2 and the oxidation catalyst 3 were measured in exactly the same manner as that of Comparative Example 1. The result of the measurement of the pore diameter of the pores of the porous filter substrate 2 and the oxidation catalyst 3 is shown in Figure 9. The result of the measurement of the total porosity of the porous filter substrate 2 and the oxidation catalyst 3 is shown in Figure 4.

As shown in Figure 9, in the oxidation catalyst device for exhaust gas purification 1 in this Comparative Example, the pore diameter of the pores of the porous filter substrate 2 and the oxidation catalyst 3 is in the range of 0.02 to 100 µm. Here, considering that the average pore diameter of the pores of the porous filter substrate 2 is 11.2 µm, it is considered that the pore diameter of the pores of the oxidation catalyst 3 is in the range of 0.02 to 10 µm.

In addition, as shown in Figure 4, it is clear that in the oxidation catalyst device for exhaust gas purification 1 in this Comparative Example, the total porosity of the porous filter substrate 2 and the oxidation catalyst 3 is 62.3% by volume.

Next, for the oxidation catalyst device for exhaust gas purification 1 in this Comparative Example, the oxidation catalyst performance evaluation test was performed in exactly the same manner as that of Comparative Example 1. The result is shown in Figure 5.

As shown in Figure 5, it is clear that in the oxidation catalyst device for exhaust gas purification 1 in this Comparative Example, the time required until 90% by mass of the collected particulates are combusted is 348 seconds.

### [Comparative Example 6]

In this Comparative Example, first, except that yttrium nitrate pentahydrate, silver nitrate, and manganese nitrate hexahydrate were mixed at a molar ratio of 0.95:0.05:1, an aqueous solution of a mixture of the above compounds was obtained in exactly the same manner as that of Comparative Example 1.

Next, except that the aqueous solution obtained in this Comparative Example was used, the aqueous solution was applied to the porous filter substrate 2 and calcined in exactly the same manner as that of Comparative Example 1 to manufacture an oxidation catalyst device for exhaust gas purification 1 in this Comparative Example. The oxidation catalyst device for exhaust gas purification 1 in this Comparative Example comprised an oxidation catalyst 3 composed of a complex metal oxide represented by the chemical formula Y_{0.95}Ag_{0.05}MnO₃. The amount of the oxidation catalyst 3 supported per an apparent volume of 1 L of the porous filter substrate 2 was 40 g in total.

Next, for the oxidation catalyst device for exhaust gas purification 1 in this Comparative Example, the pore diameter of the pores of the porous filter substrate 2 and the oxidation catalyst 3, and the total porosity of the porous filter substrate 2 and the oxidation catalyst 3 were measured in exactly the same manner as that of Comparative Example 1. The result of the measurement of the pore diameter of the pores of the porous filter substrate 2 and the oxidation catalyst 3 is shown in Figure 10. The result of the measurement of the total porosity of the porous filter substrate 2 and the oxidation catalyst 3 is shown in Figure 4.

As shown in Figure 10, in the oxidation catalyst device for exhaust gas purification 1 in this Comparative Example, the pore diameter of the pores of the porous filter substrate 2 and the oxidation catalyst 3 is in the range of 0.01 to 100 µm. Here, considering that the average pore diameter of the pores of the porous filter substrate 2 is 11.2 µm, it is considered that the pore diameter of the pores of the oxidation catalyst 3 is in the range of 0.01 to 10 µm.

In addition, as shown in Figure 4, it is clear that in the oxidation catalyst device for exhaust gas purification 1 in this Example, the total porosity of the porous filter substrate 2 and the oxidation catalyst 3 is 67.5% by volume.

Next, for the oxidation catalyst device for exhaust gas purification 1 in this Comparative Example, the oxidation catalyst performance evaluation test was performed in exactly the same manner as that of Comparative Example 1. The result is shown in Figure 5.

As shown in Figure 5, it is clear that in the oxidation catalyst device for exhaust gas purification 1 in this Comparative Example, the time required until 90% by mass of the collected particulates are combusted is 451 seconds.

### [Comparative Example 7]

In this Comparative Example, first, yttrium nitrate pentahydrate, silver nitrate, manganese nitrate hexahydrate, and ruthenium nitrate were mixed at a molar ratio of 0.95:0.05:0.95:0.05 to obtain a mixture of the above compounds. Next, the obtained mixture was dissolved in pure water so that the yttrium concentration was 0.04 mol/L, to obtain a first aqueous solution of the mixture. Next, an aqueous solution of zirconia dispersed in water (the zirconia concentration was 20% by volume) was added to the first aqueous solution so that the zirconia concentration was 0.01 mol/L, to obtain a second aqueous solution comprising the above mixture and zirconia.

Next, except that the second aqueous solution obtained in this Comparative Example was used, the aqueous solution was applied to the porous filter substrate 2 and calcined in exactly the same manner as that of Comparative Example 1 to manufacture an oxidation catalyst device for exhaust gas purification 1 in this Comparative Example. The oxidation catalyst device for exhaust gas purification 1 in this Comparative Example comprised an oxidation catalyst 3 composed of a complex metal oxide represented by the chemical formula Y_{0.95}Ag_{0.05}Mn_{0.95}Ru_{0.05}O₃, and comprising 5% by mass of zirconium oxide with respect to the complex metal oxide. The amount of the oxidation catalyst 3 supported per an apparent volume of 1 L of the porous filter substrate 2 was 40 g in total.

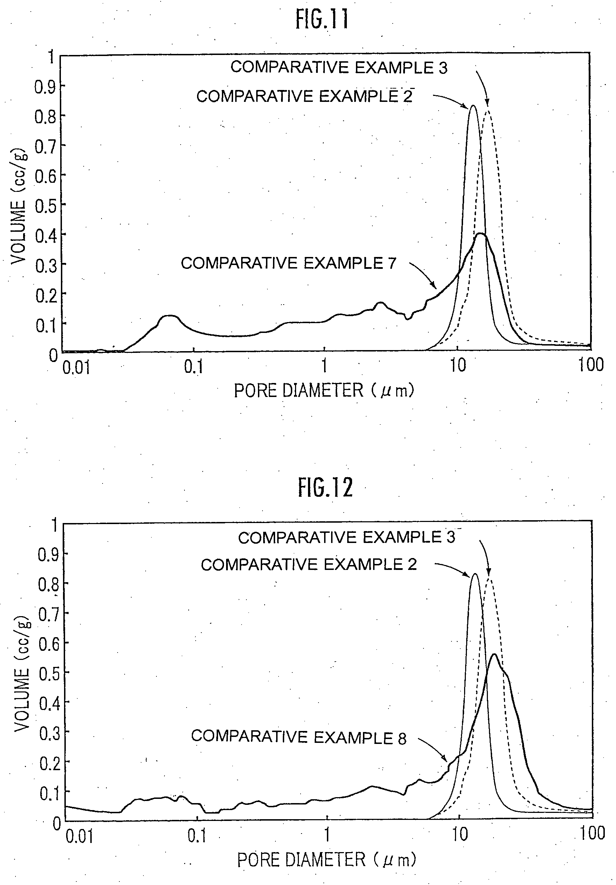

Next, for the oxidation catalyst device for exhaust gas purification 1 in this Comparative Example, the pore diameter of the pores of the porous filter substrate 2 and the oxidation catalyst 3, and the total porosity of the porous filter substrate 2 and the oxidation catalyst 3 were measured in exactly the same manner as that of Comparative Example 1. The result of the measurement of the pore diameter of the pores of the porous filter substrate 2 and the oxidation catalyst 3 is shown in Figure 11. The result of the measurement of the total porosity of the porous filter substrate 2 and the oxidation catalyst 3 is shown in Figure 4.

As shown in Figure 11, in the oxidation catalyst device for exhaust gas purification 1 in this Comparative Example, the pore diameter of the pores of the porous filter substrate 2 and the oxidation catalyst 3 is in the range of 0.01 to 100 µm. Here, considering that the average pore diameter of the pores of the porous filter substrate 2 is 11.2 µm, it is considered that the pore diameter of the pores of the oxidation catalyst 3 is in the range of 0.01 to 10 µm.

In addition, as shown in Figure 4, it is clear that in the oxidation catalyst device for exhaust gas purification 1 in this Comparative Example, the total porosity of the porous filter substrate 2 and the oxidation catalyst 3 is 62.3% by volume.

Next, for the oxidation catalyst device for exhaust gas purification 1 in this Comparative Example, the oxidation catalyst performance evaluation test was performed in exactly the same manner as that of Comparative Example 1. The result is shown in Figure 5.

As shown in Figure 5, it is clear that in the oxidation catalyst device for exhaust gas purification 1 in this Comparative Example, the time required until 90% by mass of the collected particulates are combusted is 258 seconds.

### [Comparative Example 8]

In this Comparative Example, first, except that yttrium nitrate pentahydrate, silver nitrate, manganese nitrate hexahydrate, and titanium(IV) methoxide were mixed at a molar ratio of 0.95:0.05:0.95:0.05, a second aqueous solution comprising a mixture of the above compounds and zirconia was obtained in exactly the same manner as that of Comparative Example 7.

Next, except that the second aqueous solution obtained in this Comparative Example was used, the aqueous solution was applied to the porous filter substrate 2 and calcined in exactly the same manner as that of the Comparative Example 7 to manufacture an oxidation catalyst device for exhaust gas purification 1 in this Comparative Example. The oxidation catalyst device for exhaust gas purification 1 in this Comparative Example comprised an oxidation catalyst 3 composed of a complex metal oxide represented by the chemical formula Y_{0.95}Ag_{0.05}Mn_{0.95}Ti_{0.05}O₃, and comprising 5% by mass of zirconium oxide with respect to the complex metal oxide. The amount of the oxidation catalyst 3 supported per an apparent volume of 1 L of the porous filter substrate 2 was 40 g in total.

Next, for the oxidation catalyst device for exhaust gas purification 1 in this Comparative Example, the pore diameter of the pores of the porous filter substrate 2 and the oxidation catalyst 3, and the total porosity of the porous filter substrate 2 and the oxidation catalyst 3 were measured in exactly the same manner as that of Comparative Example 7. The result of the measurement of the pore diameter of the pores of the porous filter substrate 2 and the oxidation catalyst 3 is shown in Figure 12. The result of the measurement of the total porosity of the porous filter substrate 2 and the oxidation catalyst 3 is shown in Figure 4.

As shown in Figure 12, in the oxidation catalyst device for exhaust gas purification 1 in this Comparative Example, the pore diameter of the pores of the porous filter substrate 2 and the oxidation catalyst 3 is in the range of 0.01 to 100 µm. Here, considering that the average pore diameter of the pores of the porous filter substrate 2 is 11.2 µm, it is considered that the pore diameter of the pores of the oxidation catalyst 3 is in the range of 0.01 to 10 µm.

In addition, as shown in Figure 4, it is clear that in the oxidation catalyst device for exhaust gas purification 1 in this Comparative Example, the total porosity of the porous filter substrate 2 and the oxidation catalyst 3 is 59.5% by volume.

Next, for the oxidation catalyst device for exhaust gas purification 1 in this Comparative Example, the oxidation catalyst performance evaluation test was performed in exactly the same manner as that of Comparative Example 7. The result is shown in Figure 5.

As shown in Figure 5, it is clear that in the oxidation catalyst device for exhaust gas purification 1 in this Comparative Example, the time required until 90% by mass of the collected particulates are combusted is 267 seconds.

### [Example 2]

In this Example, first, except that yttrium nitrate pentahydrate, silver nitrate, manganese nitrate hexahydrate, and iron nitrate nonahydrate were mixed at a molar ratio of 0.95:0.05:0.95:0.05, a second aqueous solution comprising a mixture of the above compounds and zirconia was obtained in exactly the same manner as that of Comparative Example 7.

Next, except that the second aqueous solution obtained in this Example was used, the aqueous solution was applied to the porous filter substrate 2 and calcined in exactly the same manner as that of Comparative Example 7 to manufacture an oxidation catalyst device for exhaust gas purification 1 in this Example. The oxidation catalyst device for exhaust gas purification 1 in this Example comprised an oxidation catalyst 3 composed of a complex metal oxide represented by the chemical formula Y_{0.95}Ag_{0.05}Mn_{0.95}Fe_{0.05}O₃, and comprising 5% by mass of zirconium oxide with respect to the complex metal oxide. The amount of the oxidation catalyst 3 supported per an apparent volume of 1 L of the porous filter substrate 2 was 40 g in total.

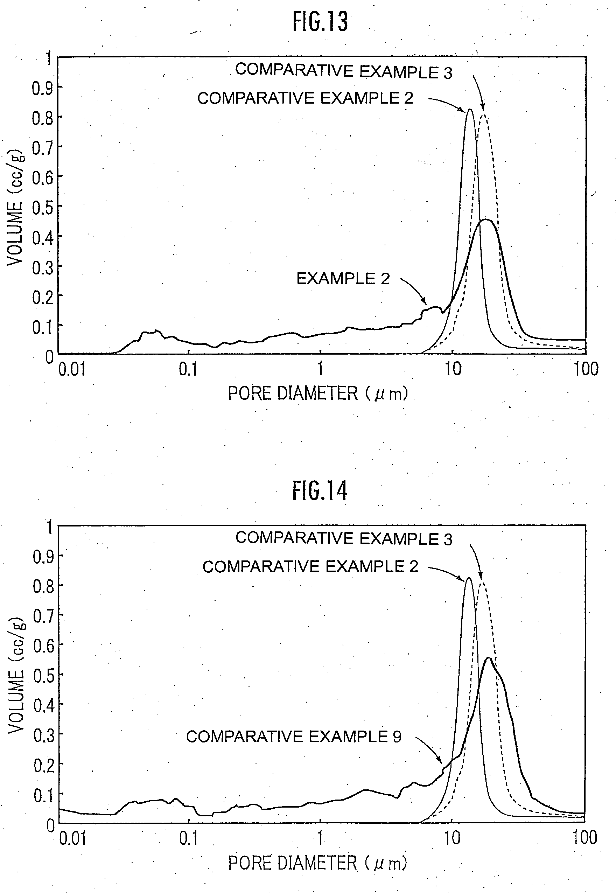

Next, for the oxidation catalyst device for exhaust gas purification 1 in this Example, the pore diameter of the pores of the porous filter substrate 2 and the oxidation catalyst 3, and the total porosity of the porous filter substrate 2 and the oxidation catalyst 3 were measured in exactly the same manner as that of Comparative Example 7. The result of the measurement of the pore diameter of the pores of the porous filter substrate 2 and the oxidation catalyst 3 is shown in Figure 13. The result of the measurement of the total porosity of the porous filter substrate 2 and the oxidation catalyst 3 is shown in Figure 4.

As shown in Figure 13, in the oxidation catalyst device for exhaust gas purification 1 in this Example, the pore diameter of the pores of the porous filter substrate 2 and the oxidation catalyst 3 is in the range of 0.02 to 100 µm. Here, considering that the average pore diameter of the pores of the porous filter substrate 2 is 11.2 µm, it is considered that the pore diameter of the pores of the oxidation catalyst 3 is in the range of 0.02 to 10 µm.

In addition, as shown in Figure 4, it is clear that in the oxidation catalyst device for exhaust gas purification 1 in this Example, the total porosity of the porous filter substrate 2 and the oxidation catalyst 3 is 56.8% by volume.

Next, for the oxidation catalyst device for exhaust gas purification 1 in this Example, the oxidation catalyst performance evaluation test was performed in exactly the same manner as that of Comparative Example 7. The result is shown in Figure 5.

As shown in Figure 5, it is clear that in the oxidation catalyst device for exhaust gas purification 1 in this Example, the time required until 90% by mass of the collected particulates are combusted is 295 seconds.

### [Comparative Example 9]

In this Comparative Example, first, except that yttrium nitrate pentahydrate and manganese nitrate hexahydrate were mixed at a molar ratio of 1:1, a second aqueous solution comprising a mixture of the above compounds and zirconia was obtained in exactly the same manner as that of Comparative Example 7.

Next, except that the second aqueous solution obtained in this Comparative Example was used, the aqueous solution was applied to the porous filter substrate 2 and calcined in exactly the same manner as that of Comparative Example 7 to manufacture an oxidation catalyst device for exhaust gas purification 1 in this Comparative Example. The oxidation catalyst device for exhaust gas purification 1 in this Comparative Example comprised an oxidation catalyst 3 composed of a complex metal oxide represented by the chemical formula YMnO₃, and comprising 5% by mass of zirconium oxide with respect to the complex metal oxide. The amount of the oxidation catalyst 3 supported per an apparent volume of 1 L of the porous filter substrate 2 was 40 g in total.

Next, for the oxidation catalyst device for exhaust gas purification 1 in this Comparative Example, the pore diameter of the pores of the porous filter substrate 2 and the oxidation catalyst 3, and the total porosity of the porous filter substrate 2 and the oxidation catalyst 3 were measured in exactly the same manner as that of Comparative Example 7. The result of the measurement of the pore diameter of the pores of the porous filter substrate 2 and the oxidation catalyst 3 is shown in Figure 14. The result of the measurement of the total porosity of the porous filter substrate 2 and the oxidation catalyst 3 is shown in Figure 4.

As shown in Figure 14, in the oxidation catalyst device for exhaust gas purification 1 in this Comparative Example, the pore diameter of the pores of the porous filter substrate 2 and the oxidation catalyst 3 is in the range of 0.01 to 100 µm. Here, considering that the average pore diameter of the pores of the porous filter substrate 2 is 11.2 µm, it is considered that the pore diameter of the pores of the oxidation catalyst 3 is in the range of 0.01 to 100 µm.

In addition, as shown in Figure 4, it is clear that in the oxidation catalyst device for exhaust gas purification 1 in this Comparative Example, the total porosity of the porous filter substrate 2 and the oxidation catalyst 3 is 55.2% by volume.

Next, for the oxidation catalyst device for exhaust gas purification 1 in this Comparative Example, the oxidation catalyst performance evaluation test was performed in exactly the same manner as that of Comparative Example 7. The result is shown in Figure 5.

As shown in Figure 5, it is clear that in the oxidation catalyst device for exhaust gas purification 1 in this Comparative Example, the time required until 90% by mass of the collected particulates are combusted is 338 seconds.

### [Comparative Example 10]

In this Comparative Example, first, except that yttrium nitrate pentahydrate, silver nitrate, and manganese nitrate hexahydrate were mixed at a molar ratio of 0.95:0.05:1, a second aqueous solution comprising a mixture of the above compounds and zirconia was obtained in exactly the same manner as that of Comparative Example 7.

Next, except that the second aqueous solution obtained in this Comparative Example was used, the aqueous solution was applied to the porous filter substrate 2 and calcined in exactly the same manner as that of Comparative Example 7 to manufacture an oxidation catalyst device for exhaust gas purification 1 in this Comparative Example. The oxidation catalyst device for exhaust gas purification 1 in this Comparative Example comprised an oxidation catalyst 3 composed of a complex metal oxide represented by the chemical formula Y_{0.95}Ag_{0.05}MnO₃, and comprising 5% by mass of zirconium oxide with respect to the complex metal oxide. The amount of the oxidation catalyst 3 supported per an apparent volume of 1 L of the porous filter substrate 2 was 40 g in total.

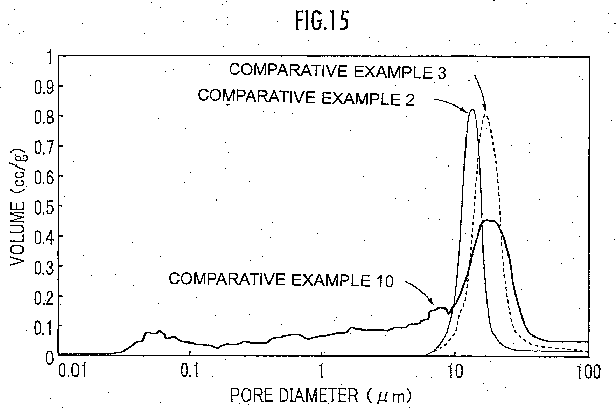

Next, for the oxidation catalyst device for exhaust gas purification 1 in this Comparative Example, the pore diameter of the pores of the porous filter substrate 2 and the oxidation catalyst 3, and the total porosity of the porous filter substrate 2 and the oxidation catalyst 3 were measured in exactly the same manner as that of Comparative Example 7. The result of the measurement of the pore diameter of the pores of the porous filter substrate 2 and the oxidation catalyst 3 is shown in Figure 15. The result of the measurement of the total porosity of the porous filter substrate 2 and the oxidation catalyst 3 is shown in Figure 4.

As shown in Figure 15, in the oxidation catalyst device for exhaust gas purification 1 in this Comparative Example, the pore diameter of the pores of the porous filter substrate 2 and the oxidation catalyst 3 is in the range of 0.01 to 100 µm. Here, considering that the average pore diameter of the pores of the porous filter substrate 2 is 11.2 µm, it is considered that the pore diameter of the pores of the oxidation catalyst 3 is in the range of 0.01 to 10 µm.

In addition, as shown in Figure 4, it is clear that in the oxidation catalyst device for exhaust gas purification 1 in this Comparative Example, the total porosity of the porous filter substrate 2 and the oxidation catalyst 3 is 56.3% by volume.

Next, for the oxidation catalyst device for exhaust gas purification 1 in this Comparative Example, the oxidation catalyst performance evaluation test was performed in exactly the same manner as that of Comparative Example 7. The result is shown in Figure 5.

As shown in Figure 5, it is clear that in the oxidation catalyst device for exhaust gas purification 1 in this Comparative Example, the time required until 90% by mass of the collected particulates are combusted is 448 seconds.

From Figure 5, it is clear that in all of the oxidation catalyst devices for exhaust gas purification 1 in Examples 1 and 2, the time required until 90% by mass of the collected particulates are combusted is less than 460 seconds. On the other hand, it is clear that in both of the oxidation catalyst devices for exhaust gas purification in Comparative Examples 2 and 3, the above combustion time is 700 seconds or more.

Therefore, it is clear that the oxidation catalyst devices for exhaust gas purification 1 in Examples 1 and 2 can oxidize and combust particulates in exhaust gas from an internal combustion engine in a shorter time than the oxidation catalyst devices for exhaust gas purification in Comparative Examples 2 and 3.

### Reference Signs List

1 ... an oxidation catalyst device for exhaust gas purification, 2 ... a porous filter substrate, 3 ... an oxidation catalyst, 4a ... an exhaust gas inflow portion, 4c ... a surface of the porous filter substrate, 5b ... an exhaust gas outflow portion.

## Claims

1. An oxidation catalyst device for exhaust gas purification comprising:
a porous filter substrate having a wall flow structure having one end as an exhaust gas inflow portion and having the other end as an exhaust gas outflow portion; and
an oxidation catalyst supported on the porous filter substrate and comprised of a complex metal oxide,
the oxidation catalyst device for exhaust gas purification comprising the oxidation catalyst formed by applying an aqueous solution of compounds of a plurality of metals constituting the complex metal oxide to a surface of the porous filter substrate by any one method of a spray drying method, a spray pyrolysis method, and a freeze drying method, and calcining the aqueous solution, the oxidation catalyst coating the surface of the porous filter substrate into which exhaust gas flowing in from the exhaust gas inflow portion is to be introduced, and comprised of a porous body having pores having a smaller pore diameter than that of pores of the porous filter substrate, wherein
the oxidation catalyst is comprised of any one complex metal oxide represented by a chemical formula Y₁₋ₓAgₓMn_{1-y}Fe_{y}O₃ (0.01 ≤ x ≤ 0.30 and 0.005 ≤ y ≤ 0.30), and
a total porosity of the porous filter substrate and the porous body is in the range of 50 to 80% by volume.

2. The oxidation catalyst device for exhaust gas purification according to claim 1, wherein the oxidation catalyst comprises zirconium oxide in the range of 5 to 20% by mass with respect to the complex metal oxide.

3. The oxidation catalyst device for exhaust gas purification according to claim 1 or claim 2, wherein 95% or more of all the pores of the porous body have a pore diameter less than 10 µm

## Patentansprüche

1. Oxidationskatalysator-Vorrichtung zur Abgasreinigung umfassend:
ein poröses Filtersubstrat mit einer Wandströmungsstruktur mit einem Ende als einen Abgas-Einlassabschnitt und mit dem anderen Ende als einen Abgas-Auslassabschnitt; und
einen Oxidationskatalysator, der auf dem porösen Filtersubstrat geträgert ist und ein komplexes Metalloxid umfasst,
wobei die Oxidationskatalysator-Vorrichtung zur Abgasreinigung den Oxidationskatalysator umfasst, der gebildet wird durch Aufbringen einer wässrigen Lösung der Verbindungen einer Vielzahl von Metallen, die das komplexe Metalloxid ausmachen, auf eine Oberfläche des porösen Filtersubstrats durch eines der Verfahren von einem Sprühtrocknungsverfahren, einem Sprühpyrolyseverfahren, und einem Gefriertrocknungsverfahren, und Calcinieren der wässrigen Lösung, wobei der Oxidationskatalysator die Oberfläche des porösen Filtersubstrats bedeckt, in das aus dem Abgas-Einlassabschnitt einfließendes Abgas eingeführt werden soll, und einen porösen Körper mit Poren mit einem kleineren Porendurchmesser als der von Poren des porösen Filtersubstrats umfasst, wobei
der Oxidationskatalysator ein beliebiges komplexes Metalloxid umfasst, das durch eine chemische Formel Y₁₋ₓAgₓMn_{1-y}Fe_{y}O₃ (0,01 ≤ x ≤ 0,30 und 0,005 ≤ y ≤ 0,30) dargestellt wird, und
eine Gesamtporosität des porösen Filtersubstrats und des porösen Körpers im Bereich von 50-80 Volumenprozent ist.

2. Oxidationskatalysator-Vorrichtung zur Abgasreinigung nach Anspruch 1, wobei der Oxidationskatalysator Zirkoniumoxid im Bereich von 5-20 Massenprozent in Bezug auf das komplexe Metalloxid umfasst.

3. Oxidationskatalysator-Vorrichtung zur Abgasreinigung nach Anspruch 1 oder Anspruch 2, wobei 95 % oder mehr aller Poren des porösen Körpers einen Porendurchmesser von weniger als 10 µm aufweisen.

## Revendications

1. Dispositif à catalyseur d'oxydation pour purification de gaz d'échappement, comprenant :
un substrat à filtre poreux ayant une structure de flux de paroi ayant une extrémité en tant que partie d'arrivée de gaz d'échappement et ayant l'autre extrémité en tant que partie de sortie de gaz d'échappement ; et
un catalyseur d'oxydation supporté sur le substrat à filtre poreux et composé d'un oxyde métallique complexe,
le dispositif à catalyseur d'oxydation pour purification de gaz d'échappement comprenant le catalyseur d'oxydation formé en appliquant une solution aqueuse de composés d'une pluralité de métaux constituant l'oxyde métallique complexe sur une surface du substrat à filtre poreux par tout procédé parmi un procédé de séchage par pulvérisation, un procédé de pyrolyse par pulvérisation et un procédé de lyophilisation, et en calcinant la solution aqueuse, le catalyseur d'oxydation revêtant la surface du substrat à filtre poreux dans lequel le gaz d'échappement arrivant depuis la partie d'arrivée de gaz d'échappement doit être introduit, et composé d'un corps poreux ayant des pores ayant un diamètre de pore plus petit que celui des pores du substrat à filtre poreux, dans lequel
le catalyseur d'oxydation est composé de tout oxyde métallique complexe représenté par une formule chimique Y₁₋ₓAgₓMn_{1-y}Fe_{y}O₃ (0,01 ≤ x ≤ 0,30 et 0,005 ≤ y ≤ 0,30), et
une porosité totale du substrat à filtre poreux et du corps poreux est dans la gamme de 50 à 80 % en volume.

2. Dispositif à catalyseur d'oxydation pour purification de gaz d'échappement selon la revendication 1, dans lequel le catalyseur d'oxydation comprend de l'oxyde de zirconium dans la gamme de 5 à 20 % en masse par rapport à l'oxyde métallique complexe.

3. Dispositif à catalyseur d'oxydation pour purification de gaz d'échappement selon la revendication 1 ou la revendication 2, dans lequel 95 % ou plus de tous les pores du corps poreux ont un diamètre de pore inférieur à 10 µm.
